(19) Europäisches Patentamt

European Patent Office

Office européen des brevets

(11) Publication number: **0 221 758 B1**

(12) **EUROPEAN PATENT SPECIFICATION**

(45) Date of publication of patent specification: **02.01.92**  (51) Int. Cl.⁵: **G11B 23/037**, G11B 23/087

(21) Application number: **86308388.7**

(22) Date of filing: **28.10.86**

(54) **Tape reel assemblies for magnetic tape cassettes.**

(30) Priority: **29.10.85 JP 166217/85**

(43) Date of publication of application:
**13.05.87 Bulletin 87/20**

(45) Publication of the grant of the patent:
**02.01.92 Bulletin 92/01**

(84) Designated Contracting States:
**AT DE FR GB NL**

(56) References cited:
**EP-A- 0 140 636**
**EP-A- 0 168 971**
**FR-A- 2 445 583**
**GB-A- 2 018 224**
**GB-A- 2 040 878**

(73) Proprietor: **SONY CORPORATION**
**7-35 Kitashinagawa 6-Chome Shinagawa-ku**
**Tokyo 141(JP)**

(72) Inventor: **Urayama, Kiyoshi Sony Magnetic**
**Products Inc**
**6-5-6 Kitashinagawa Shinagawa-ku**
**Tokyo(JP)**
Inventor: **Tateno, Shigeru Tochigi Video-Tech**
**Corporation**
**1724 Aza-Sakae Ohaza-shimotsuboyama**
**Minamikawachi-cho Tochigi-ken(JP)**

(74) Representative: **Thomas, Christopher Hugo et**
**al**
**D Young & Co 10 Staple Inn**
**London WC1V 7RD(GB)**

## Description

This invention relates to tape reel assemblies for magnetic tape cassettes, and to magnetic tape cassettes including such tape reel assemblies.

Japanese Utility Model Second (Examined) Publication (Jikko) 59/35898 discloses a tape reel for a compact video tape (8 mm video tape) cassette. The tape reel comprises, in particular, a reel hub assembly including an integrally attached lower reel flange. The reel hub assembly is generally cylindrical and has an inner cylindrical section with a substantially cylindrical recess for receiving a reel shaft of a recording and/or reproducing apparatus. The reel hub assembly also has an upper reel flange support surface. An upper reel flange is mounted on the upper reel flange support surface of the reel hub assembly.

A centre pin and a plurality of fastening projections are formed on the upper reel flange support surface of the reel hub assembly. The centre pin extends through a central aperture in the upper reel flange for centring the upper reel flange with respect to the reel hub assembly. The fastening projections similarly extend through apertures in the upper reel flange surrounding the central aperture. The fastener projections are crimped after engaging the corresponding apertures of the upper reel flanges, so as to fasten the upper reel flange to the upper reel flange support surface.

With this tape reel assembly, it is difficult to ensure that the plane of the upper reel flange support surface is accurately flat and accurately parallel to the lower reel flange, due to normal production errors and tolerances.

Similar tape reel assemblies, which suffer from similar problems, are disclosed in French patent specification FR-A-2 445 583 (GB-A-2 040 264), and UK patent specifications GB-A-2 040 878 and GB-A-2 018 224.

According to the present invention there is provided a tape reel assembly for a magnetic tape cassette, the assembly comprising:
a reel hub comprising an outer cylinder onto which a magnetic tape can be wound and an inner cylinder for receiving a reel shaft of an associated magnetic tape recording and/or reproducing apparatus;
a first flange integrally formed with said reel hub and extending perpendicular to the axis of said reel hub at one end thereof;
a second flange to be mounted on the other end of said reel hub; and
an annular support for said second flange;
characterized by:
said support for said second flange being in the form of a substantially annular projection associated with said inner cylinder and having an outer end surface perpendicular to said axis, said outer end surface being at a greater axial distance from said first flange than the outer end surface of said outer cylinder; and
a plurality of pins extending from said outer end surface of said annular projection for fixing said second flange to said outer end surface of said annular projection.

The invention will now be described by way of example with reference to the accompanying drawings, throughout which like parts are referred to by like references, and in which:

Figure 1 is an exploded perspective view of a magnetic tape cassette comprising an embodiment of tape reel assembly according to the present invention;

Figure 2 is a perspective view of two tape reel assemblies on which a magnetic tape is wound;

Figure 3 is a cut-away view of an embodiment of tape reel assembly including a reel hub and a lower flange, and according to the present invention;

Figure 4 shows a cross-section through the reel hub and the lower flange of Figure 3;

Figure 5 is a plan view of the reel hub assembly of Figure 3, as viewed in the direction of an arrow V in Figure 4; and

Figure 6 shows a cross-section through the reel hub and the lower flange of Figure 3, as attached to an upper flange.

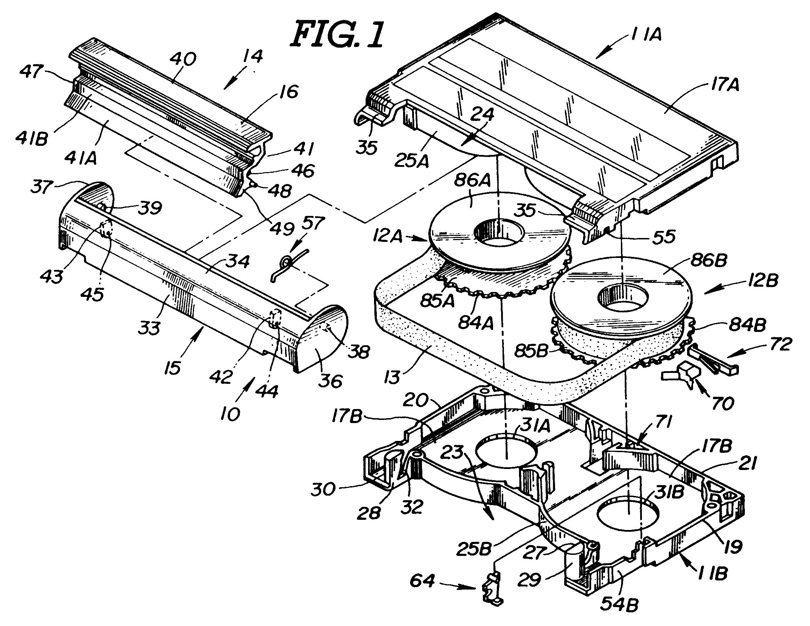

Figure 1 shows a magnetic tape cassette 10 in which the embodiment of tape reel assembly according to the present invention is used, and which is described in our US patent application serial no 651,452 filed 17 September 1984. The tape cassette 10 is of a type intended for use in an 8 mm video tape recorder (VTR).

The tape cassette 10 comprises a substantially rectangular cassette housing 11 composed of upper and lower housing portions 11A and 11B, and a pair of tape reel assemblies 12A and 12B rotatably retained side-by-side in the housing 11 and having a magnetic tape 13 wound on their reels. The cassette 10 includes a lid assembly 14 and an outer lid assembly 15. The lid assembly 14 is pivotally mounted on the housing 11 for movement between open and closed positions. In the open position of the lid assembly 14, the segment of the tape 13 between the tape reel assemblies 12A and 12B is exposed for withdrawal from the housing 11, while in the closed position, the lid assembly 14 covers or encloses the tape 13 both in front of and behind the tape 13.

The upper and lower housing portions 11A and 11B have generally rectangular top and bottom walls 17A and 17B, respectively, and end walls 19 and 20 extend along the margins of both the top and bottom walls 17A and 17B, and engage each other along a plane of separation which is substantially parallel to the walls brought together vertically, that is, in the direction normal to the plane of separation. The periphery of the housing also includes a back wall 21 along one of the relatively long sides of the housing 11. At the front side of the housing 11, an opening between the lid assembly 14 and the outer lid assembly 15 extends nearly all the way between the end walls 19 and 20. The bottom wall 17B has an approximately trapezoidal cut-out 23 communicating with the tape opening. The ends of the cut-out 23 are spaced inwardly from the end walls 19 and 20.

A rectangular cut-out 24 approximately as wide as the cut-out 23 is formed in the forward portion of the top wall 17A and has a depth smaller than the depth of the cut-out 23 as measured at the middle of the housing 11. A flange 25A with curving portions depends from the top wall 17A behind the cut-out 24 and mates with a flange 25B having similarly curving portions directed upwardly from the bottom wall 17B along the back edge of the cut-out 23. When the housing portions 11A and 11B are brought together vertically, the flanges 25A and 25B engage to define a partition by which a space containing the reels 12A and 12B within the housing 11 is isolated from the opening 22 and the cut-out 23.

At the opposite ends of the cut-out 23, the housing portion 11B is formed or moulded with upstanding walls 27 and 28 directed forwardly from the opposite ends of the flange 25B. The walls 27 and 28 are higher than the flange 25B so as to extend from the bottom wall 17B to the top wall 17A in the assembled cassette 10. The outwardly directed surfaces of the walls 27 and 28 which are spaced from the end walls 19 and 20 are formed with semi-cylindrical or rounded surfaces 29 and 30 acting as tape guides at the opposite ends of the tape opening.

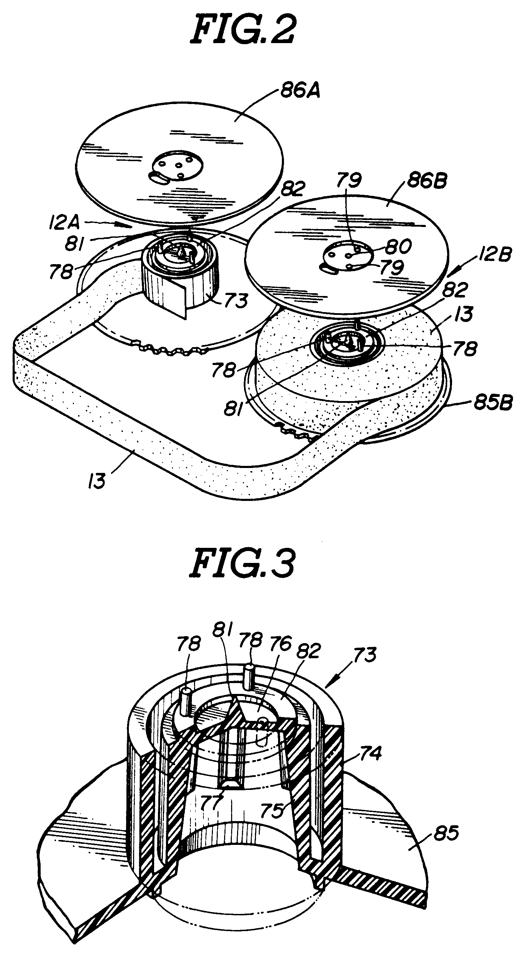

The bottom wall 17B has laterally spaced apart circular apertures 31A and 31B, in which reel hubs 73 (Figure 2) of the tape reel assemblies 12A and 12B respectively, are loosely received from within the housing 11. Through the apertures 31A and 31B, drive shafts or spindles (not shown) of a VTR can engage the reel hubs 73 in the usual way when the cassette 10 is operatively positioned in a VTR.

The segment of the tape 13 which extends between the tape reel assemblies 12A and 12B is directed forwardly from the tape reel assemblies 12A and 12B around the surfaces 29 and 30 so as to establish a tape run extending across the opening. The walls 27 and 28 have curving, approximately vertical guide grooves 32 in their inwardly directed surfaces for controlling pivoting movement of an inner lid member 16 relative to the outer lid assembly 15 during movement of the latter between opened and closed positions of the lid assembly 14.

The outer lid assembly 15 includes a front wall portion 33 of length approximately equal to the distance between the end walls 19 and 20, a shallow top wall portion 34 extending from the upper edge of the front wall portion 33 and having a width smaller than the depth of the cut-out 24 in the top wall 17A, so as to be engageable over depressed, shelf-like extensions 35 of the top wall 17A at the opposite ends of the cut-out 24.

Ears 36 and 37 directed rearwardly from the opposite ends of the front and top wall portions 33 and 34 have inwardly directed pivots or trunnions 38 and 39 respectively for pivotally mounting the outer lid assembly 15 on the end walls 19 and 20 respectively. When thus pivotally connected with the housing 11, the outer lid assembly 15, in its closed position, has its front wall portion 33 covering the front of the tape run, while the top wall portion 34 of the outer lid assembly 15 extends over the tape run.

The lid assembly 14 is approximately as long as the cut-out 24 and includes an elongated head portion 40 dimensioned so as to span the gap between the longitudinal edge of the cut-out 24 and the top wall portion 34 of the outer lid assembly 15 in the closed position of the latter. The inner lid member 16 includes an angled skirt portion 41 extending generally downwardly and forwardly from the head portion 40 along the length of the latter. The skirt portion 41 is dimensioned so that when the lid assembly 14 is in its closed position, the skirt portion 41 extends downwardly behind the tape run with a lower edge part 41A of the skirt portion 41 substantially abutting the lower edge portion of the front wall portion 33 under the tape run. Thus, the tape run between the tape reel assemblies 12A and 12B is substantially enclosed and protected within a space defined between the lid assemblies 14 and 15 in the closed position of the lid assembly 14 so that there is no possibility of dust accumulation or other injurious contact with the back surface of the tape run through the cut-out 23.

Mounting lugs 42 and 43 are preferably mounted integrally with the top wall portion 34 of the outer lid assembly 15 at laterally spaced locations corresponding to the ends of the inner lid member 16 and have openings 44 and 45 for pivotally receiving aligned pivot pins 46 and 47 extending from opposite ends of an intermediate part 41B of the skirt portion 41. The lugs 42 and 43 are preferably laterally resilient while the end surfaces of the pins 46 and 47 are oblique or slanted to permit them to snap into the respective openings 44 and 45. Upon engagement of the pins 46 and 47 in the holes of the lugs 42 and 43, the inner lid member 16 is mounted on the outer lid assembly 15 for pivotable movement with respect to the latter.

Movements of the inner lid member 16 relative to the outer lid assembly 15 are affected in response to pivotal movement of the outer lid assembly 15 relative to the housing 11 by means of follower pins 48 and 49 at the opposite ends of the lower edge part 41A of the skirt portion 41. The follower pins 48 are slidably engageable in the guide grooves 32 in the walls 27 and 28. The illustrated shape of each of the guide grooves 32 is selected to ensure that the lower edge part 41A of the skirt portion 41 comes close to the lower edge of the front wall portion 33 only when the lid assembly 14 is approximately at its wholly closed position, in order to avoid any contact of the lid assembly 14 with the tape run during movement of the opened and closed positions of the lid assembly 14.

In order to urge the lid assembly 14 to its closed position, the cassette 10 further includes a respective coil spring 57 associated with each pivot 38 and 39.

The cassette 10 further includes a latch element 64 mounted adjacent to the end wall 19 of the housing 11. The latch element 64 has an engaged condition for locking the lid assembly 14 in its closed position and a releasing or disengaged position for permitting movement of the lid assembly 14 to its opened position. The coil spring 57 is thus provided for urging the lid assembly 14 to its closed position but also acts on the latch element 64 when the housing portions 11A and 11B are assembled together for urging the latch element 64 to the engaged condition thereof.

The cassette 10 further includes a brake assembly which acts as a reel lock and includes a brake body 70 and a brake guide structure 71 in the housing 11 at a location between the tape reel assemblies 12A and 12B adjacent to the rear of the housing 11. The brake guide structure 71 operates to guide the brake body 70 in a plane parallel to the plane of separation of the housing portions 11A and 11B. A pair of diverging, resilient, blade-like extensions project from the brake body 70 to the tape reel assemblies 12A and 12B, respectively, and engage two respective peripheries 84A and 84B of lower flanges 85 of the tape reel assemblies 12A and 12B respectively. A plate spring member 72 which is also installed in the housing urges the brake body 70 to its extended position.

Figure 2 shows the tape reel assemblies 12A and 12B in the cassette 10 of Figure 1. Each of the tape reel assemblies 12A and 12B comprises the lower flange 85, an upper flange 86 and the hub section 73. The lower flange 85 and the hub section 73 are formed integrally of a synthetic resin. The assembly of the lower flange 85 and the hub section 73 may be formed by moulding or any other appropriate process. On the other hand, the upper flange 86 is formed separately from the aforementioned assembly of the lower flange 85 and the hub section 73.

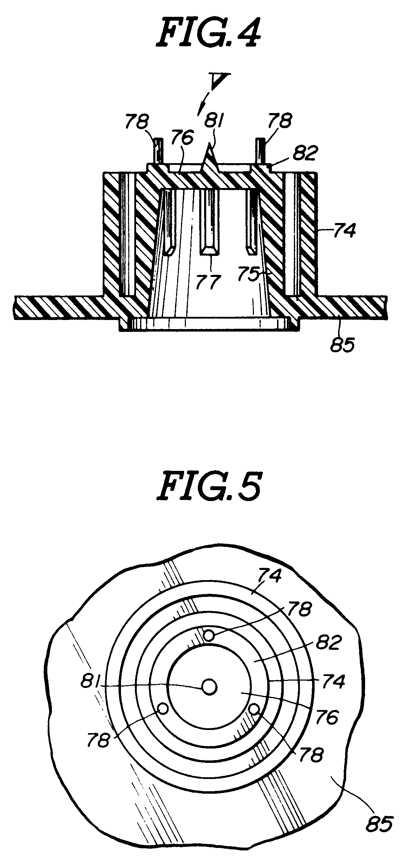

As shown in Figures 3, 4 and 5, the hub section 73 comprises an outer cylindrical section 74 and an inner cylindrical section 75. The outer cylindrical section 74 and the inner cylindrical section 75 are coaxially arranged with respect to the centre axis of the tape reel assembly 12A or 12B. The outer cylindrical section 74 serves as a reel hub onto which the tape 13 is wound. The inner cylindrical section 75 has a top wall 76 extending substantially horizontally, that is perpendicular to the centre axis, so as to close the top end of the inner cylindrical section 75. The lower end of the inner cylindrical section 75 is open to receive a reel shaft (not shown) of the VTR. Radially inwardly extending projections 77 on the inner periphery of the inner cylindrical section 75 are designed to engage with a head with radial projections of the reel shaft of the VTR. Therefore, the inner cylindrical section 75 serves as a reel shaft receptacle.

A plurality of fastening pins 78 extend upwardly from the upper surface of the top wall 76 of the inner cylindrical section 75. The pins 78 are arranged radially symmetrically about the centre axis. Each of the pins 78 is of generally conical configuration and designed to pass through an aperture 79 in the upper flange 86. The upper flange 86 also has a central aperture 80. The central aperture 80 receives a central positioning pin 81 extending from the centre of the upper surface of the top wall 76 of the inner cylindrical section 75.

A substantially annular projection 82 is formed on the upper surface of the top wall 76. In this embodiment, the annular projection 82 extends along the circumferential edge around the centre axis and across the positions of the pins 78. The upper surface of the annular projection 82 lies in a plane parallel to but higher than, that is, axially spaced from, the top end of the outer cylindrical section 74. The plane in which the upper surface of the annular projection 82 lies is precisely parallel to the lower flange 85.

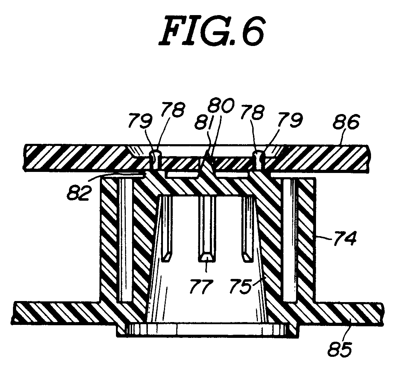

Thus, the upper flange 86 is mounted on the top wall 76 of the inner cylindrical section 75 by engagement between the apertures 79 and 80, and the pins 78 and 81. As particularly shown in Figure 6, the lower surface of the upper flange 86 abuts the upper surface of the annular projection 82 so as to be supported above the upper surface of the top wall 76 with a small clearance therebetween. During assembly, the pins 78 are crimped after the upper flange 86 has been placed on the top wall 76 of the inner cylindrical section 75. The fastening pins 78 may be crimped by thermal welding, such as ultrasonic welding.

In the construction shown, the upper surface of the annular projection 82 is substantially smaller than the upper surface of the top wall 76. Therefore, it is easier to make the upper surface of the annular projection 82 precisely parallel to the lower flange 85. Therefore, the upper flange 86 can be supported precisely parallel to the lower flange 85.

Moreover, even although the portions of the annular projection 82 near the fastening pins 78 may be deformed by the heat of thermal welding, the upper flange 86 can be held parallel to the lower flange by the remaining unaffected portions of the annular projection 82.

Although the present invention has been disclosed in terms of tape reel assemblies specifically for 8 mm VTR tape cassettes, it is ready applicable to any type of magnetic tape cassette which requires a tape reel assembly with upper and lower flanges, or with at least one flange disposed accurately perpendicular to the axis of the reel hub.

**Claims**

1.  A tape reel assembly (12A, 12B) for a magnetic tape cassette, the assembly (12A, 12B) comprising:
    a reel hub (74, 75) comprising an outer cylinder (74) onto which a magnetic tape (13) can be wound and an inner cylinder (75) for receiving a reel shaft of an associated magnetic tape recording and/or reproducing apparatus;
    a first flange (85) integrally formed with said reel hub (74, 75) and extending perpendicular to the axis of said reel hub (74,75) at one end thereof;
    a second flange (86) to be mounted on the other end of said reel hub (74, 75); and
    an annular support for said second flange (86);
    characterized by:
    said support for said second flange (86) being in the form of a substantially annular projection (82) associated with said inner cylinder (75) and having an outer end surface perpendicular to said axis, said outer end surface being at a greater axial distance from said first flange (85) than the outer end surface of said outer cylinder (74); and
    a plurality of pins (78) extending from said outer end surface of said annular projection (82) for fixing said second flange (86) to said outer end surface of said annular projection (82).

**Revendications**

1.  Ensemble de bobine de bande (12A, 12B) destiné à une cassette de bande magnétique, l'ensemble (12A, 12B) comprenant :
    un moyeu (74, 75) de bobine ayant un cylindre externe (74) sur lequel une bande magnétique (13) peut être enroulée et un cylindre interne (75) destiné à loger un arbre d'entraînement de bobine d'un appareil associé d'enregistrement et/ou de lecture de bande magnétique,
    une première joue (85) formée en une seule pièce avec le moyeu (74, 75) de bobine et disposée perpendiculairement à l'axe du moyeu (74, 75) de bobine à une première extrémité de celui-ci,
    une seconde joue (86) destinée à être montée sur l'autre extrémité du moyeu (74, 75) de la bobine, et
    un support annulaire de la seconde joue (86), caractérisé en ce que :
    le support de la seconde joue (86) est sous forme d'une saillie sensiblement annulaire (82) associée au cylindre interne (75) et ayant une surface d'extrémité externe perpendiculaire à l'axe, cette surface d'extrémité externe étant à une plus grande distance axiale de la première joue (85) que la surface d'extrémité externe du cylindre externe (74), et
    plusieurs ergots (78) dépassant de la surface d'extrémité externe de la saillie annulaire (82) et destinés à fixer la seconde joue (86) sur la surface d'extrémité externe de la saillie annulaire (82).

**Patentansprüche**

1.  Bandspulen-Aufbau (12A, 12B) für eine Magnetbandkassette, wobei der Aufbau (12A, 12B) umfaßt:
    eine Spulennabe (74, 75), die einen äußeren Zylinder (74), auf welchen ein Magnetband (13) gewickelt werden kann, und einen inneren Zylinder (75) zum Aufnehmen einer Spulenwelle eines zugeordneten Magnetband-Aufzeichnungs/Wiedergabe-Geräts enthält.
    einen ersten Flansch (85), der einstückig mit der Spulennabe (74, 75) ausgebildet ist und sich senkrecht zu der Achse der Spulennabe (74, 75) an einem Ende derselben erstreckt,
    einen zweiten Flansch (86), der an dem anderen Ende der Spulennabe (74, 75) zu montieren ist, und
    ein ringförmiges Auflager für den zweiten Flansch (86), **gekennzeichnet** dadurch,
    daß das Auflager für den zweiten Flansch (86) von der Form eines im wesentlichen ringförmigen Vorsprungs (82) ist, der dem inneren Zylinder (75) zugeordnet ist und eine äußere Endoberfläche hat, die senkrecht zu der Achse verläuft, wobei die äußere Endoberfläche einen größeren axialen Abstand von dem ersten Flansch (85) als die äußere Endoberfläche des äußeren Zylinders (74) aufweist, und durch eine Vielzahl von Stiften (78), die sich von der äußeren Endoberfläche des ringförmigen Vorsprungs (82) aus zum Befestigen des zweiten Flansches (86) an der äußeren Endoberfläche des ringförmigen Vorsprungs (82) erstrecken.

FIG.1

## FIG.2

## FIG.3

# FIG.4

# FIG.5

# FIG.6